Europäisches Patentamt

European Patent Office

Office européen des brevets

(19)

(11) Numéro de publication : **0 018 252**
**B1**

(12) # FASCICULE DE BREVET EUROPÉEN

(45) Date de publication du fascicule du brevet :
16.02.83

(21) Numéro de dépôt : 80400411.7

(22) Date de dépôt : 28.03.80

(51) Int. Cl.³ : **B 64 D 29/06**

(54) **Dispositif de suspension d'un groupe propulsif à une cellule d'avion, outillage et procédé pour la mise en œuvre.**

(30) Priorité : 09.04.79 FR 7909396

(43) Date de publication de la demande :
29.10.80 Bulletin 80/22

(45) Mention de la délivrance du brevet :
16.02.83 Bulletin 83/07

(84) Etats contractants désignés :
DE FR GB IT NL SE

(56) Documents cités :
FR A 1 176 952
FR A 2 326 327
US A 2 815 184

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Legrand, Paul Joseph**
**Résidence du Chateau Avenue des Frênes**
**F-77530 Vaux Le Penil (FR)**
Inventeur : **Dubeau, Michel Louis**
**131 allée des Peupliers**
**F-77190 Dammarie Les Lys (FR)**
Inventeur : **Pachomoff, Guy Robert**
**16, chemin des Longaines**
**F-91100 Corbeil-Essonnes (FR)**

(74) Mandataire : **Moinat, François et al**
**S.N.E.C.M.A. Service des Brevets Boîte Postale 81**
**F-91003 Evry Cedex (FR)**

# Dispositif de suspension d'un groupe propulsif à une cellule d'avion, outillage et procédé pour la mise en œuvre

L'invention concerne un dispositif de suspension d'un groupe motopropulseur à une cellule d'avion permettant la mise en place de la fixation d'un moteur par un puits de faible encombrement prévu dans la cellule ; elle concerne également un outillage et un procédé pour sa mise en œuvre.

Le brevet français n° 2 326 327 donne un exemple d'un dispositif de suspension de groupe motopropulseur. La suspension à la cellule est réalisée en partie par une cheville centrale et par des bielles de commande latérales. La cheville transmet les forces de poussée transversales à la cellule et permet les mouvements verticaux entre le groupe motopropulseur et la cellule, tandis que les bielles assurent la suspension du groupe à la cellule. La cheville sert en outre d'élément de centrage du groupe lors de la mise en place pendant le montage. La cheville creuse reçoit à l'extrémité coopérant avec le groupe un élément d'ancrage libre de coulisser dans l'axe de la cheville, et fileté intérieurement. Lors du montage, on introduit dans la cheville une barre d'un dispositif de hissage, qui est vissée à une extrémité dans l'élément d'ancrage et à l'autre extrémité de laquelle on fixe un câble de hissage qui est relié à un treuil. Lorsque les bielles de commande sont fixées, on démonte le fil de hissage et la barre, ce qui libère l'élément d'ancrage et permet les déplacements transversaux du groupe par rapport à la cellule.

Dans ce dispositif, le centrage et la suspension sont obtenus par des organes différents. L'accès à la cheville nécessite une porte de visite et un puits d'accès de dimensions suffisantes pour le passage des outils de montage et du câble de hissage. Or, dans un avion d'armes, la nécessité d'augmenter dans toute la mesure du possible les réserves de carburant, oblige à tirer parti du moindre volume disponible dans la cellule.

L'invention propose la réalisation d'un dispositif de suspension de conception originale permettant la réduction des portes de visite et des puits d'accès par l'utilisation d'un outillage particulier ainsi qu'un procédé de montage permettant d'accéder « en aveugle » au système de fixation.

Selon l'invention, en effet, le dispositif est constitué de trois ensembles, deux des ensembles étant en place de façon permanente sur respectivement le moteur et la cellule et comportant chacun une articulation, le troisième ensemble dit de liaison vissé dans l'ensemble en place sur le moteur et immobilisé en translation et libre en rotation dans l'ensemble en place sur la cellule et ainsi reliant les deux ensembles précédents, l'articulation de l'ensemble en place sur la cellule comportant un passage axial permettant l'introduction au moins partielle de l'ensemble de liaison jusqu'à une partie des moyens de fixation prévus dans ledit passage axial et immobilisant la translation de l'ensemble de liaison par le puits de la cellule au moyen d'un outillage convenable.

Les explications et figures données ci-après à titre d'exemples permettront de bien comprendre comment l'invention peut être réalisée.

La figure 1 montre le dispositif de suspension monté.

La figure 2 représente l'ensemble fixé de façon permanente sur le moteur.

Les figures 3, 4 représentent des phases de montage du dispositif.

Le groupe motopropulseur de l'exemple décrit comporte une suspension principale à l'avant et une suspension auxiliaire à l'arrière.

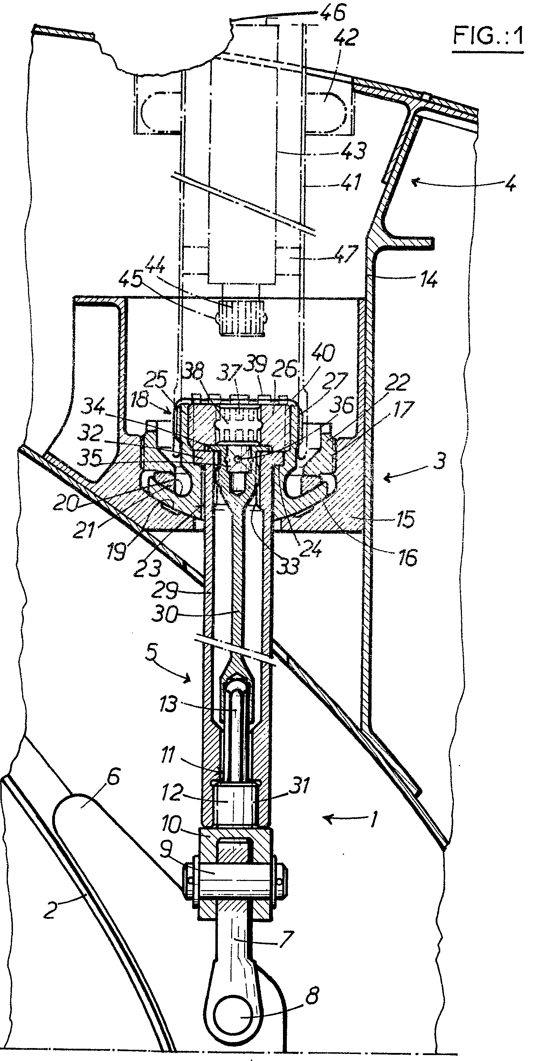

Le dispositif de suspension selon l'invention représenté figure 1 permet la mise en place de la fixation auxiliaire d'un moteur à une cellule d'avion.

Ce dispositif est constitué de trois ensembles : un ensemble 1 monté de façon permanente sur le carter de moteur 2, un deuxième ensemble 3 monté de façon permanente sur la cellule 4 de l'avion et un troisième ensemble 5 dit « de liaison » reliant les ensembles 1 et 3. Les ensembles montés de façon permanente tant sur le carter que sur la cellule comportent une articulation de manière à permettre leur orientation mutuelle lors du montage de l'ensemble de liaison.

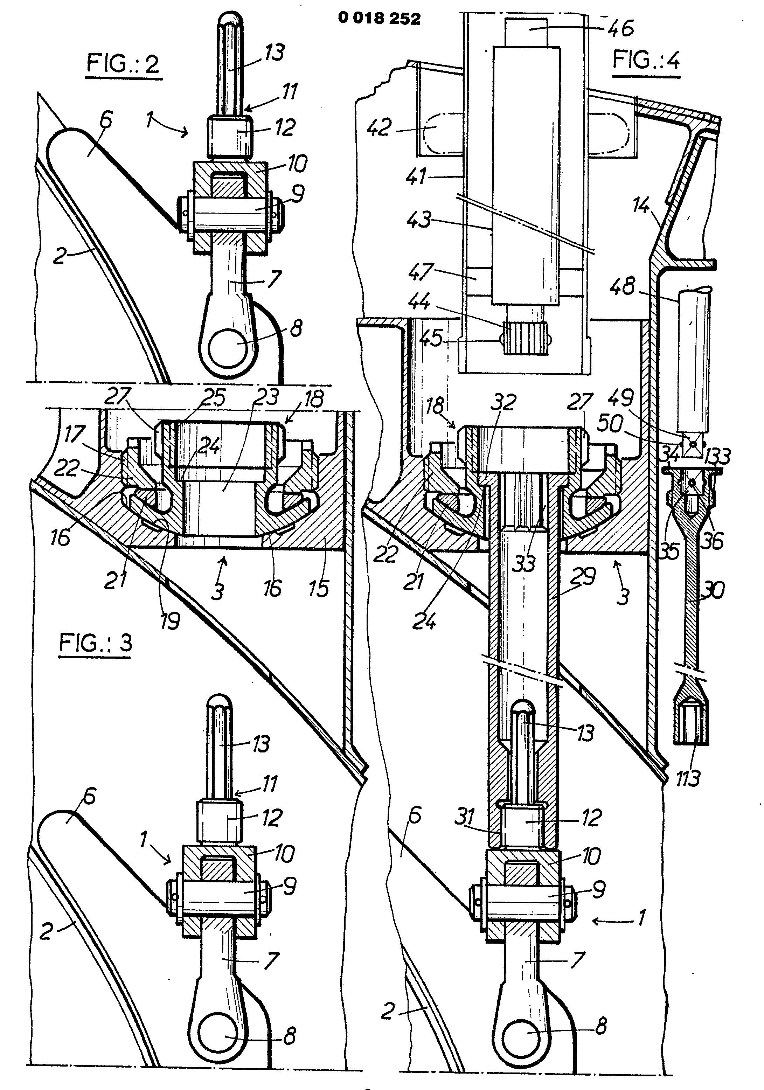

L'ensemble 1 (figure 2) est monté sur une chape 6 solidaire du carter 2 du moteur et est constitué, dans la forme de réalisation représentée, d'une bielle 7 articulée sur un axe 8 maintenu par la chape. L'autre extrémité de la bielle s'articule par l'intermédiaire d'un axe 9 dans une chape 10. Cette chape est prolongée par une tige 11, dont la partie voisine de la chape porte un filetage 12 et la partie libre 13 est munie de moyens de blocage en rotation, par exemple un six pans.

L'ensemble forme cardan. Un ressort (non représenté) maintient cet ensemble dans une position telle qu'elle facilite les opérations de présentation entre pièces moteur et pièces cellule.

L'ensemble 3 (figure 1 et 3) est disposé au fond d'un puits 14 prévu dans la cellule et se compose :

— d'un premier élément 15, solidaire de la cellule comportant une portée sphérique concave 16 dans le fond d'un alésage cylindrique dont une partie 17 est filetée ;

— d'un second élément 18 comportant une partie de révolution à une extrémité de laquelle sont prévues deux portées sphériques convexe 19 et concave 20. La portée 19 vient s'appuyer sur la portée sphérique 16. La portée 20 reçoit une bague de maintien 21 sphéro cylindrique serrée par une bague filetée 22 qui se visse sur la partie filetée 17 du premier élément 15, de manière à régler la raideur de l'articulation formée par les portées 16 et 19.

La pièce 18 porte selon son axe de symétrie un passage 23 constituant au moins une partie des moyens de fixation de l'ensemble de liaison. Ce passage axial présente trois alésages de diamètre différent : deux des alésages déterminent une portée plate 24 destinée à maintenir un élément de l'ensemble de liaison 5, le troisième alésage 25 porte un filetage destiné à un organe de verrouillage 26 appartenant à l'ensemble de liaison. La pièce 18 porte à sa périphérie et dans la zone correspondant approximativement à l'alésage 25 des cannelures 27 permettant l'immobilisation de l'articulation lors de la mise en place de l'ensemble de liaison.

L'ensemble de liaison 5 (figures 1 et 4) comporte deux pièces 29 et 30 au moins partiellement cylindriques et coaxiales :

— une première pièce dite de liaison 29 se présentant approximativement sous la forme d'un tube portant à une extrémité un alésage fileté 31 destiné à coopérer avec la partie filetée 12 de tige de l'ensemble 1 suivi d'un alésage d'un diamètre suffisant pour permettre le libre passage de la partie de tige 13 ; l'autre extrémité porte une collerette 32 prévue pour se loger dans l'alésage et sur la portée plate 24 de l'élément 18 de l'ensemble 3, et intérieurement des rainures longitudinales 33 ;

— une deuxième pièce 30 dite de verrouillage présentant à une extrémité des moyens 113 susceptibles de coopérer avec les pans de la tige 13 (selon l'exemple de réalisation, un six pans creux) ; et à l'autre extrémité, à sa périphérie, des cannelures longitudinales 133 coopérant avec les cannelures 33 de la pièce de liaison 29, une collerette 34 susceptible de reposer sur la collerette 32 de la pièce de liaison 29, et une empreinte 35 coaxiale qui, selon une forme de réalisation, est formée d'un quatre pans creux dans lequel sont prévus des logements 36 recevant les billes de maintien d'un élément d'outillage ;

— un organe de verrouillage 26 (figure 1) formant écrou, fileté extérieurement et coopérant avec le filetage de l'alésage 25 de l'élément 18.

Cet organe porte un passage central présentant des moyens de prise 37 et de retenue 38 d'un élément d'outillage. Selon une forme de réalisation, les moyens de prise sont constitués par des cannelures, et les moyens de retenue, par une gorge circulaire dans laquelle se placeront les billes d'encliquetage de l'élément d'outillage. L'organe 26 présente en outre sur une de ses faces parallèles un évidement dans lequel se loge la collerette 34 de l'élément de verrouillage 30 et sur l'autre, des créneaux 39 qui permettront le verrouillage de l'écrou par un organe élastique 40 passant dans les cannelures de l'élément 18.

La figure 1 montre en traits interrompus une partie de l'outillage destiné à la mise en œuvre du dispositif. L'outillage complet est montré à la figure 4 et comprend :

— un tube de guidage 41 introduit dans le puits 14 et venant s'engager dans les cannelures 27 de la pièce 18. Il est lui-même maintenu en position dans le puits par des guides 42 ;

— une première clé 43 portant à une extrémité des cannelures 44 et des billes de retenue 45 destinées à s'engager dans les cannelures et logements du tube de liaison 29 et de l'organe de verrouillage 26 pour leur introduction et leur mise en place, et à l'autre extrémité, un carré d'entraînement 46. Cette clé porte également des pattes de centrage 47 pour le positionnement automatique des pièces entraînées ;

— une seconde clé 48 dont une extrémité porte un carré 49 avec billes d'encliquetage 50. Cette clé est destinée à la mise en place de l'élément de verrouillage 30 et coopère avec l'empreinte 35 et les logements 36.

Le procédé pour la mise en œuvre du dispositif de suspension et de l'outillage conforme à la description précédente, va être décrit ci-après.

Le moteur portant des roulettes est amené sur des rails de guidage en position sous les dispositifs de suspension de la cellule. Les ensembles 1, fixés sur le moteur, sont maintenus dans la position voulue par des ressorts.

On introduit dans le puits 14 de la cellule le tube de guidage 41 pour l'amener en prise avec les cannelures 27 de la pièce 18. Le tube est éventuellement maintenu dans sa partie extérieure au puits afin d'éviter toute rotation tant du tube que de l'élément de rotule 18. On place, à l'extrémité de la clé 43, la pièce de liaison 29 dont les cannelures internes 33 et les logements de billes viennent coopérer avec les cannelures 44 et les billes 45 de la clé. On introduit l'ensemble dans le tube guide de manière que la pièce de liaison passe par le passage axial de la rotule. Lorsque l'extrémité filetée 31 de la pièce 29 vient en prise avec le filet 12 de la tige 11, on visse jusqu'au contact l'extrémité de la pièce 29 sur la chape 10. Le moteur s'est, pendant le vissage, soulevé et les roulettes ont été libérées du rail de guidage. La clé 43 est retirée. On place à l'extrémité de la clé 48 la pièce de verrouillage 30 qui y est maintenue par les billes et l'on introduit, par le puits dans le tube de guidage, l'ensemble. La pièce 30 pénètre dans l'alésage de la pièce de liaison 29 et l'extrémité six pans 113 creux va coiffer l'extrémité de la tige 13, tandis que les cannelures extérieures 133 de l'autre extrémité s'engrènent dans celles, internes, de la pièce de liaison. On induit, lors de la mise en place de la pièce de verrouillage, une légère torsion entraînant une rotation limitée de la pièce de liaison dans le sens du vissage d'où un « survissage » qui maintiendra un vissage sans jeu et évitera une détérioration des filetages par battement. La clé 48 est alors retirée.

On place à l'extrémité de la clé 43 ou première clé, l'organe de verrouillage 26 et l'ensemble est alors introduit par le puits et le tube de guidage, de manière que l'organe vienne en prise sur le filetage 25 de la pièce 18. On bloque par vissage la collerette 32 de la pièce de liaison 29 sur la portée plate 24 de l'élément 18. On retire la clé 43, puis le tube guide 41 et l'on place l'organe élastique 40 entre les créneaux 39 et les cannelures 27, de manière à bloquer l'organe 26 en rotation. Le démontage du dispositif de suspension s'opère de la même manière que le montage, mais en prenant les opérations dans le sens inverse.

Comme la description a permis de le comprendre, toutes les interventions sur le dispositif de suspension se font en « aveugle » par un puits de faible encombrement prévu dans la cellule à l'aide d'un outillage approprié. Tous les éléments de liaison et de blocage sont introduits et mis en place par ce puits, ce qui permet de réduire les espaces morts généralement nécessaires dans les fixations actuelles.

Le dispositif selon l'invention permet également le hissage du moteur à sa place sans moyens de levage auxiliaire. Cette possibilité de levage, bien que limitée, est suffisante à partir des rails de guidage du moteur.

**Revendications**

1. Dispositif de suspension d'un groupe motopropulseur (2) à une cellule d'avion permettant la mise en place de la fixation d'un moteur par des puits (14) de faible encombrement prévus dans la cellule, caractérisé en ce qu'il est constitué de trois ensembles (1 ; 3 ; 5), deux des ensembles (1 ; 3) étant en place de façon permanente sur respectivement le moteur (2) et la cellule (4) et comportant chacun une articulation, le troisième ensemble (5) dit de liaison, vissé dans l'ensemble (1) en place sur le moteur et immobilisé en translation et libre en rotation dans l'ensemble (3) en place sur la cellule et ainsi reliant les deux ensembles précédents, l'articulation de l'ensemble (3) en place sur la cellule comportant un passage axial (23) permettant l'introduction au moins partielle de l'ensemble de liaison (5) jusqu'à une partie (24) des moyens de fixation (24,26) prévus dans ledit passage axial et immobilisant en translation l'ensemble (5) de liaison par le puits (14) de la cellule au moyen d'un outillage convenable.

2. Dispositif de suspension selon la revendication 1, caractérisé en ce que l'ensemble (1) en place sur le moteur porte une tige (11) dont une partie est filetée (12) et l'autre (13) porte des moyens de blocage en rotation.

3. Dispositif de suspension selon la revendication 1 ou 2, caractérisé en ce que l'ensemble (3) en place sur la cellule formant articulation comporte, au fond d'un puits (14), un premier élément (15) solidaire de la cellule comportant une portée sphérique concave (16) et une partie filetée intérieurement (17), un second élément (18) comportant une partie de révolution à une extrémité de laquelle sont prévues deux portées sphériques concave (20) et convexe (19) traversées par un passage axial (23) pour le passage de l'élément de liaison (5), une bague de maintien (21) placée contre la portée sphérique concave (20) du second élément maintenue par l'intermédiaire de la partie filetée (17) du premier élément (15), la portée sphérique convexe (19) du second élément coopérant avec la portée sphérique concave 20 du premier élément, l'autre extrémité de la partie de révolution (18) comportant dans son passage axial (23) au moins une partie des moyens de fixation (24, 26) de l'ensemble de liaison (5).

4. Dispositif de suspension selon la revendication 3, caractérisé en ce que le passage axial (23) présente trois alésages : deux des alésages déterminant une portée plate (24) maintenant un élément de l'ensemble de liaison, le troisième alésage (25) portant un filetage interne destiné à un organe de verrouillage (26) appartenant à l'ensemble de liaison (5), et des cannelures sur sa partie extérieure pour le maintenir au moyen d'un élément d'outillage.

5. Dispositif de suspension selon l'une des revendications précédentes, caractérisé en ce que l'ensemble de liaison (5) comporte deux pièces (29, 30) au moins partiellement cylindriques et coaxiales : une première pièce (29) dite de liaison, au moins partiellement creuse, portant à une extrémité deux alésages coaxiaux, un premier alésage fileté intérieurement (31) pour coopérer avec la partie filetée (12) de la tige de l'ensemble en place sur le moteur, un deuxième alésage permettant le libre passage de la partie (13) de tige portant les moyens de blocage en rotation, et à l'autre extrémité, une collerette (32) coopérant avec la portée plate (24) du passage axial du second élément (3) de l'ensemble en place sur la cellule et à l'intérieur, des rainures longitudinales (33) ; une deuxième pièce (30) dite de verrouillage présentant à une extrémité des moyens (113) susceptibles de coopérer avec la partie (13) de tige portant les moyens de blocage en rotation de l'ensemble en place sur le moteur, et à l'autre extrémité, une collerette (34) coopérant, d'une part, avec le dessus de la collerette (32) de la pièce de liaison et, d'autre part, avec un organe de verrouillage (26), des cannelures externes coopérant avec les rainures de la pièce de liaison, une empreinte interne (35) recevant un élément d'outillage, un organe de verrouillage (26), coopérant avec le filetage interne du second élément (3) de l'ensemble en place sur la cellule, présentant un alésage comportant des moyens de prise (37) et de retenue (38) pour une pièce d'outillage et des moyens de blocage en rotation.

6. Dispositif de suspension selon la revendication 5, caractérisé en ce que les moyens de blocage en rotation de l'organe de verrouillage (26) sont constitués de créneaux (39) portés par la face libre de l'organe, d'un organe élastique (40) et des cannelures prévues sur la partie extérieure du second élément (18) de l'ensemble (3) en place sur la cellule.

7. Outillage pour la mise en œuvre du dispositif de suspension selon l'une des revendications précédentes, caractérisé en ce qu'il comporte trois éléments : un tube de guidage (41) à introduire dans le puits (14) et dont une extrémité coopère avec les cannelures (27) prévues sur la partie extérieure du second élément (18), une première clé (43) comportant à une extrémité des cannelures (44) et un organe élastique de retenue (45) pour coopérer avec les moyens de prise (37)

et de retenue (38) de l'organe de verrouillage (26) ou avec les rainures longitudinales (33) de la pièce de liaison (29) pour son introduction par le puits et à l'autre extrémité, des moyens d'entraînement (46), une seconde clé (48) dont une extrémité porte une empreinte (49) correspondant à celle (35) prévue sur la pièce de verrouillage (30) pour son introduction et sa mise en place, et l'autre extrémité porte des moyens d'entraînement.

8. Procédé pour la pose d'un dispositif de suspension conforme à la revendication 1, le moteur étant amené en position sur ses rails sous les ensembles placés sur la cellule, les ensembles placés sur le moteur étant maintenus dans une position approximativement verticale, caractérisé en ce qu'on introduit dans le puits (14) le tube de guidage (41) jusqu'à son engagement dans les cannelures (27) du second élément (18) placé sur la nacelle, puis on maintient le tube (41) pour empêcher sa rotation ;

— on place la pièce de liaison (29) à l'extrémité de la première clé (43) et l'on introduit l'ensemble par le tube de guidage (41), on visse l'extrémité (31) de la pièce de liaison sur la partie filetée (12) de la tige (11) en place sur le moteur jusqu'à ce que la collerette (32) repose sur la portée plate (24) du second ensemble (3) placé sur la cellule, on continue le vissage pour soulever le moteur de ses rails, on dégage la clé (43) ;

— on place la pièce de verrouillage (30) à l'extrémité de la seconde clé (48) et l'on introduit l'ensemble par le tube de guidage (41) de manière que l'extrémité libre (113) de la pièce (30) vienne se placer sur les moyens de blocage en rotation (13) de la tige (11) de l'ensemble (1) placé sur le moteur et que les cannelures externes (133) de la pièce (30) viennent se placer dans les rainures (33) de la pièce de liaison (29), on dégage la clé (48) ;

— on place l'organe de verrouillage (26) à l'extrémité de la première clé (43) et l'on introduit l'ensemble par le tube de guidage (41) ;

— on visse l'organe de verrouillage (26) sur le filetage interne du second élément (18) de l'ensemble (3) en place sur la cellule et l'on exerce un léger survissage avant engagement dans les cannelures, on retire la clé (43), puis le tube de guidage (41) et on bloque l'organe de verrouillage (26) par l'organe élastique (40).

**Claims**

1. Suspension device for an engine propulsion unit (2) within an airframe enabling the location of the securing means of an engine by shafts (14) of small bulk provided within the airframe, characterised in this that it is constituted by three assemblies (1 ; 3 ; 5), two of the assemblies (1 ; 3) being mounted in a permanent manner respectively on the engine (2) and the airframe (4) and each comprising a pivot, the third assembly (5), termed the connecting assembly, which is screwed within the assembly (1), located on the engine, is restrained in translation and is free for rotation within the assembly (3) located within the airframe and thus connecting the two preceding assemblies, the pivot of the assembly (3) located on the airframe comprising an axial passage (23) enabling at least the partial introduction of the connecting assembly (5) up to a part (24) of the securing means (24, 26) provided within the said axial passage and preventing translational motion of the connecting assembly (5) by the shaft (14) of the airframe by means of suitable tooling means.

2. Suspension device according to claim 1 characterised in this that the assembly (1) located on the engine carries a rod (11) of which one part is screw-threaded (12) and the other (13) carries means for locking it against rotation.

3. Suspension device according to claim 1 or 2, characterised in this that the assembly (3) located on the airframe forming the pivot comprises, at the bottom of one shaft (14), a first member (15) rigid with the airframe comprising a concave, spherical, seating (16) and an internally screw-threaded part (17), a second member (18) comprising a part generated by a line of revolution at end of which there are provided two concave (20) and convex (19) spherical seatings traversed by an axial passage (23) for the passage of the connecting member (5), a holding ring (21) disposed against the concave spherical seating (20) of the second member held through the intermediary of the screw-threaded part (17) of the firts member (15), the convex spherical seating (19) of the second member cooperating with the concave spherical seating 20 of the first member, the other end of the part generated by a line of revolution (18) comprising within its axial passage (23) at least one part of securing means (24, 26) of the connecting assembly (5).

4. Suspension device according to claim 3, characterised in this that the axial passage (23) has three bores : two of the bores defining a plane seating (24) holding a member of the connecting assembly, the third bore (25) having an internal screw thread intended for a locking member (26) forming part of the connecting assembly (5) and ribs on the external part in order to hold it by means of a tool member.

5. Suspension device according to one of the preceding claims characterised in this that the connecting assembly (5) comprises two parts (29, 30) at least partially cylindrical and co-axial : a second part (29) termed connecting part, at least partially hollow, having at one end two coaxial bores, a firts internally-threaded bore (31) for cooperation with the screw-threaded part (12) of the rod of the mounting assembly on the engine, a second bore enabling the free passage of the portion (13) of the rod having the means for locking against rotation, and at the other end, a small collar (32) cooperating with the plane seating (24) of the axial passage of the second member (3) of the assembly in place on the airframe and in the interior, longitudinal grooves (33) ; a second part (30) termed locking part having at one end means (113) capable of cooperating with the portion (13) of the rod having the means for locking against rotation, and at the other end, a small collar (32) cooperating with the plane seating (24) of the axial passage of the second member (3) of the assembly in place on the airframe and in the interior, longitudinal grooves (33) ; a second part (30) termed locking part at one end means (113) capable of cooperating with the portion (13) of the rod having the means for locking against rotation of the assembly for mounting on the engine, and at the other end, a small collar (34) cooperating, on the one hand with the top of the small collar (32) of the connecting part and, on the other hand, with a locking member (26), external ribs cooperating with the grooves of the connecting part, an internal recess (35) receiving a tooling member, a locking member (26), cooperating with the internal screw thread of the second member (3) of the assembly located on the airframe, having a bore comprising engagement means (37) and retention means (38) for a tool part and means for locking against rotation.

6. Suspension device according to claim 5, characterised in that the locking means against rotation of the locking member (26) are constituted by dogs (39) carried on the free face of the member, a resilient member (40) and ribs provided on the external part of the second member (18) of the assembly (3) located on the airframe.

7. Tooling for putting into practice the suspension device according to one of the preceding claims, characterised in this that it comprises three members : a guide tube (41) to be introduced into the shaft (14) and of which one end cooperates with ribs (27) provided on the external part of the second member (18), a first key (43) comprising at one end ribs (44) and a resilient retention member (45) intended to cooperate with the engagement means (37) and retention means (38) of the locking member (26) or with longitudinal grooves (33) of the connecting part (29) for its introduction through the shaft to the other end, entrainment means (46), a second key (48) of which one end has a recess (43) corresponding to that provided (35) on the locking part (30) for its introduction and its location, and the other end has entrainment means.

8. Method for the location of a suspension device according to claim 1, the engine being brought into position on its rails beneath the assemblies placed on the airframe, the assemblies located on the engine being held in an approximately vertical position, characterised in this that the shaft (14) is introduced into the guide tube (41) up to its engagement with the ribs (27) of the second element (18) located on the airframe, then the tube (41) is held in order to prevent its rotation ;

— the connecting part (29) is located at the end of the first key (43) and the assembly is introduced through the guide tube (41), the end bracket (31) of the connecting part is screwed onto the screwed part (12) of the rod (11) located on the engine up to the small collar (32) which rests on the plane seating (24) of the second assembly (3) located on the airframe, screwing is continued in order to raise the engine from its rails, the key is disengaged ;

— the locking part (30) is located on the end of the second key (48) and the assembly is introduced through the guide tube (41) in such a manner that the free end (113) of the part (30) comes into location on the means for locking against rotation (13) of the rod (11) of the assembly (1) located on the engine and that the external ribs (113) of the part (30) are located within the grooves (33) of the connecting part (29), the key (48) is disengaged ;

— the locking member (26) is placed at the end of the firts key (43) and the assembly is introduced through the guide tube (41) ;

— the locking member (26) is screwed on to the internal screw thread of the second member (18) of the assembly (3) in place on the airframe and a slight overtightening is exerted before engagement in the ribs, the key (43) is withdrawn, and then the guide tube (41) and the lock member (26) is locked by the resilient member (40).

**Ansprüche**

1. Vorrichtung zur Anhängung eines Triebwerks (2) an ein Luftfahrzeug mit der Möglichkeit, einen Motor durch in der Zelle des Luftfahrzeugs vorgesehene raumsparende Schächte (14) hindurch anzubauen, dadurch gekennzeichnet, daß sie aus drei Bauteilgruppen (1 ; 3 ; 5) besteht, von denen zwei (1 ; 3) ständig mit dem Motor (2) bzw. der Zelle (4) des Luftfahrzeugs verbunden sind und jeweils ein Gelenk aufweisen, während die dritte, als Verbindungsgruppe bezeichnete Bauteilgruppe (5) in die mit dem Motor verbundene Bauteilgruppe (1) eingeschraubt ist und unverschiebbar, aber verdrehbar in der mit der Zelle verbundenen Bauteilgruppe (3) angeordnet ist und auf diese Weise die beiden vorhergenannten Bauteilgruppen miteinander verbindet, und daß das Gelenk der mit der Zelle verbundenen Bauteilgruppe (3) einen axialen Durchlaß (23) aufweist, der es ermöglicht, die Verbindungsgruppe (5) mindestens teilweise bis an einen Teil (24) der Befestigungseinrichtung (24, 26), die in dem genannten axialen Durchlaß vorgesehen ist und die Verschiebung der Verbindungsgruppe (5) ausschließt, durch den Schacht (14) der Zelle hindurch mit Hilfe eines geeigneten Werkzeugs einzuführen.

2. Vorrichtung zur Triebwerksaufhängung, nach Anspruch 1, dadurch gekennzeichnet, daß die mit dem Motor verbundene Bauteilgruppe (1) eine Stange (11), trägt, die einen Gewindeteil (12) besitzt, während ihr anderer Teil (13) eine Einrichtung zum Blockieren von Drehbewegungen aufweist.

3. Vorrichtung zur Triebwerksaufhängung, nach Anspruch 1 oder 2, dadurch gekennzeichnet, daß die mit der Zelle verbundene, ein Gelenk bildende Bauteilgruppe (3) am unteren Ende eines Schachts (14) ein erstes, mit der Zelle starr verbundenes Bauteil (15) mit einem hohlsphärischen Auflager (16) und einem mit Innengewinde versehenen Teil (17) aufweist, ferner ein zweites Bauteil (18) mit einem kugelkopfartigen Teil, an dessen einem Ende ein hohlsphärisches Auflager (20) und ein erhabensphärisches Auflager (19) vorgesehen sind, durch die ein axialer Durchlaß (23) als Durchgang für die Verbindungsgruppe (5) verläuft, ferner einen an dem hohlsphärischen Auflager (20) des zweiten Bauteils anliegenden Haltering (21), der unter Ausnützung des Gewindeteils (17) des ersten Bauteils (15) festgehalten wird, daß das erhabensphärische Auflager (19) des zweiten Bauteils mit dem hohlsphärischen Auflager (16) des ersten Bauteils zusammenwirkt, und daß das andere Ende des kugelkopfartigen Teils des Bauteils (18) in seinem axialen Durchlaß (23) mindestens einen Teil der Befestigungseinrichtung (24, 26) der Verbindungsgruppe (5) aufnimmt.

4. Vorrichtung zur Triebwerksaufhängung, nach Anspruch 3, dadurch gekennzeichnet, daß der axiale Durchlaß (23) drei Bohrungen umfaßt, und daß zwei dieser Bohrungen ein ebenes Auflager (24) bestimmen, von dem ein Element der Verbindungsgruppe gehalten wird, während in der dritten Bohrung (25) ein Innengewinde, das einem zu der Verbindungsgruppe (5) gehörigen Sperrorgan (26) zugeordnet ist, sowie an ihrer Außenseite eine Riefelung (27) vorgesehen ist, um die Verbindungsgruppe mit Hilfe eines Arbeitswerkzeugs festzuhalten.

5. Vorrichtung zur Triebwerksaufhängung, nach einem der vorhergehenden Ansprüche, dadurch gekennzeichnet, daß die Verbindungsgruppe (5) aus zwei, zumindest teilweise zylindrischen und koaxialen Teilen (29, 30) besteht, nämlich einem ersten, als Verbindungsteil bezeichneten Teil (29), das zumindest teilweise hohl ist und an seinem einen Ende zwei Koaxialbohrungen aufweist, von denen eine erste, mit Innengewinde versehene Bohrung (31) mit dem Gewindeteil (12) der Stange (11) der mit dem Motor verbundenen Bauteilgruppe zusammenwirkt, während eine zweite Bohrung den freien Durchtritt des Teils (13) der Stange mit der Einrichtung zum Blockieren von Drehbewegungen ermöglicht, und das an seinem anderen Ende einen Bund (32) besitzt, der mit dem ebenen Auflager (24) des Axialdurchlasses in dem zweiten Bauteil (18) der mit der Zelle verbundenen Bauteilgruppe (3) zusammenwirkt, sowie im Inneren mit einer Längsriefelung (33) versehen ist, und einem zweiten, als Verriegelungsteil bezeichneten Teil (30), das an seinem einen Ende eine zum Zusammenwirken mit dem Teil (13) der Stange, die die Einrichtung zum Blockieren von Drehbewegungen der mit dem Motor verbundenen Bauteilgruppe trägt, bestimmte Einrichtung (113) aufweist, und an seinem anderen Ende einen Bund (34), der einerseits mit der Oberseite des Bundes (32) des Verbindungsteils und andererseits mit einem Sperrorgan (26) zusammenwirkt, ferner eine äußere Riefelung, die mit der Riefelung des Verbindungsteils zusammenwirkt, sowie eine innere Ausnehmung (35) zur Aufnahme eines Werkzeugelements, und schließlich ein Sperrorgan (26), das mit dem Innengewinde des zweiten Bauteils (18) der mit der Zelle verbundenen Bauteilgruppe (3) zusammenwirkt und eine Bohrung aufweist, die Greifmittel (37) und Haltemittel (38) für ein Teil eines Arbeitswerkzeugs und Mittel zum Verhindern von Drehbewegungen enthält.

6. Vorrichtung zur Triebwerksaufhängung, nach Anspruch 5, dadurch gekennzeichnet, daß die Einrichtung zum Verhindern einer Drehbewegung des Sperrorgans (26) durch Vorsprünge (39), die sich auf der freien Fläche des Sperrorgans befinden, durch ein Federelement (40) und durch eine Riefelung gebildet wird, die sich auf der Außenseite des zweiten Bauteils (18) der mit der Zelle verbundenen Bauteilgruppe (3) befinden.

7. Arbeitswerkzeug für die Anwendung der Vorrichtung zur Triebwerksaufhängung nach einem der vorhergehenden Ansprüche, dadurch gekennzeichnet, daß es aus drei Elementen besteht : einem zum Einführen in den Schacht (14) bestimmten Führungsrohr (4), dessen eines Ende mit der auf der Außenseite des zweiten Bauteils (18) vorgesehenen Riefelung (27) zusammenwirkt, einem ersten Schlüssel (43), der an seinem einen Ende Riefelungen (44) und ein federndes Halteorgan (45) zum Zusammenwirken mit der Greifeinrichtung (37) und der Halteeinrichtung (38) für das Sperrorgan (26) oder mit der Längsriefelung (33) des Verbindungsteils (29) zum Einführen des Verbindungsteils in den Schacht, und an seinem anderen Ende eine Antriebseinrichtung (46) aufweist, einem zweiten Schlüssel (48), an dessen einem Ende ein Stempel (49) ausgebildet ist, der der an dem Verriegelungsteil (30) vorgesehenen Ausnehmung (35) zum Einführen und Einsetzen des Stempels angepaßt ist, und dessen anderes Ende eine Antriebseinrichtung aufweist.

8. Verfahren zum Anbringen einer Vorrichtung zur Triebwerksaufhängung nach Anspruch 1, wobei der Motor auf seinen Führungsschienen unter die mit der Zelle des Luftfahrzeugs verbundene Bauteilgruppe geführt wird und die mit dem Motor verbundene Bauteilgruppe in eine ungefähr vertikale Stellung gebracht wird, dadurch gekennzeichnet, daß das Führungsrohr (41) bis zu seinem Eingreifen in die Riefelungen (27) des zweiten Bauteils (18) der mit der Zelle verbundenen Bauteilgruppe (3) in den Schacht (14) eingeführt wird und daß das Rohr (41) dann gegen Verdrehung gesichert gehalten wird ;

— das Verbindungsteil (29) wird auf das Ende des ersten Schlüssels (43) gesetzt und das Ganze durch das Führungsrohr (41) eingeführt, und das Ende (31) des Verbindungsteils wird auf den Gewindeteil (12) der mit dem Motor verbundenen Stange (11) geschraubt, bis der Bund (32) auf der ebenen Auflagerfläche (24) des zweiten Bauteils (18) der mit der Zelle verbundenen Bauteilgruppe (3) aufliegt, dann wird das Aufschrauben fortgesetzt, um den Motor von seinen Führungsschienen abzuheben, und schließlich wird der Schlüssel (43) abgezogen ;

— das Verriegelungsteil (30) wird auf das Ende des zweiten Schlüssels (48) gesetzt, und das Ganze wird durch das Führungsrohr (41) derart eingeführt, daß das freie Ende (113) des Verriegelungsteils (30) sich über die Einrichtung (13) zum Blockieren von Drehbewegungen an der Stange (11) der mit dem Motor verbundenen Bauteilgruppe (1) schiebt, und daß die äußeren Riefelungen (133) des Verriegelungsteils (30) sich in die Riefelungen (33) des Verbindungsteils (29) schieben, dann wird der Schlüssel (48) abgezogen ;

— das Sperrorgan (26) wird auf das Ende des ersten Schlüssels (43) gesetzt, und das Ganze wird durch das Führungsrohr (41) eingeführt ;

— das Sperrorgan (26) wird in das Innengewinde in dem zweiten Bauteil (18) der mit der Zelle verbundenen Bauteilgruppe (3) geschraubt, und vor dem Eingreifen in die Riefelungen wird ein gewisses Überdrehen herbeigeführt, dann wird der Schlüssel (43) abgezogen, darauf das Führungsrohr (41) und schließlich wird das Sperrorgan (26) durch das Federelement (40) blockiert.

0 018 252

FIG.:1

0 018 252

FIG.: 2

FIG.: 4

FIG.: 3